# FASCICULE DE BREVET EUROPEEN

(11) **EP 0 863 564 B1**
(45) Date de publication et mention de la délivrance du brevet: **05.06.2002**
(21) Numéro de dépôt: 98200398.0
(22) Date de dépôt: 09.02.1998
(51) Int. Cl.: H01M 10/04, H01M 2/02, H01M 2/20

(54) **Dispositif du type accumulateur plat comprenant une cellule électrochimique et des moyens de contact électrique**
Dünnschichtakkumulatorvorrichtung bestehend aus elektrochemischer Zelle und elektrischen Kontaktmitteln
Thin type accumulator device comprising an electrochemical cell and electrical contact means

(30) Priorité: 18.02.1997 FR 9701884
(43) Date de publication de la demande: 09.09.1998
(73) Titulaire: Koninklijke Philips Electronics N.V., 5621 BA Eindhoven (NL)
(72) Inventeur: Van Lerberghe, Steven, 75008 Paris (FR)
(74) Mandataire: Lottin, Claudine

(56) Documents cités:
- US-A- 4 436 792
- US-A- 4 996 128
- US-A- 5 419 982
- US-A- 5 521 024
- PATENT ABSTRACTS OF JAPAN vol. 009, no. 049 (E-300), 2 mars 1985 -& JP 59 189554 A (TOMOYUKI AOKI), 27 octobre 1984,
- PATENT ABSTRACTS OF JAPAN vol. 012, no. 447 (E-685), 24 novembre 1988 & JP 63 174265 A (JAPAN STORAGE BATTERY CO LTD), 18 juillet 1988,
- PATENT ABSTRACTS OF JAPAN vol. 004, no. 181 (E-037), 13 décembre 1980 & JP 55 124950 A (MATSUSHITA ELECTRIC IND CO LTD), 26 septembre 1980,
- PATENT ABSTRACTS OF JAPAN vol. 013, no. 439 (E-827), 3 octobre 1989 -& JP 01 167944 A (MATSUSHITA ELECTRIC IND CO LTD), 3 juillet 1989,
- PATENT ABSTRACTS OF JAPAN vol. 014, no. 444 (E-0982), 21 septembre 1990 -& JP 02 177251 A (MATSUSHITA ELECTRIC IND CO LTD), 10 juillet 1990,

## Description

L'invention concerne un dispositif du type accumulateur plat et mince incluant une cellule électrochimique planaire avec au moins deux électrodes laminaires de polarités opposées, disposées de part et d'autre d'un matériau électrolyte, une poche étanche ayant deux faces planes en un matériau étanche et isolant électriquement, raccordées entre elles de manière étanche dans une zone de scellement périphérique et des moyens de contact électrique des électrodes formant des pattes d'électrodes s'étendant à travers ladite zone de scellement périphérique.

L'invention trouve son application dans l'industrie des piles électriques ou batteries rechargeables appliquées à l'utilisation dans des appareils portables tels que des terminaux téléphoniques.

Un dispositif du type accumulateur plat est déjà connu du brevet européen publié sous le numéro EP 0 390 557 (référence AUSTIN). Ce document décrit un accumulateur plat comprenant une cellule électrochimique planaire, ayant au moins deux plaqués d'électrodes de polarités opposées, un matériau intercalaire imprégné d'électrolyte et des pattes d'électrodes raccordées aux plaques d'électrode. La cellule électrochimique est disposée entre deux feuilles d'un matériau isolant étanche et souple, qui sont scellées à chaud, dans une zone de scellement disposée à leur périphérie, de manière à former une poche enserrant ladite cellule électrochimique. Les pattes d'électrodes s'étendent à travers la zone de scellement. Ces pattes d'électrodes sont des lamelles soudées aux plaques d'électrode et la zone de soudure est située à l'intérieur de la poche planaire et baigne dans l'électrolyte. Dans une des mises en oeuvre de l'accumulateur, la feuille supérieure de la poche planaire peut avoir des ouvertures pratiquées en coïncidence avec les pattes d'électrode, pour permettre la prise de contacts externes sur ces pattes à travers ces ouvertures supérieures. Lesdites ouvertures sont disposées dans la zone périphérique de scellement des deux feuilles supérieure et inférieure de la poche.

Un dispositif du type accumulateur plat est également connu du brevet du Japon JP 55 124950 (PATENT ABSTRACTS OF JAPAN vol. 004,no. 181,E-037,13 décembre 1980. Ce document montre un tel dispositif en coupe et vu du dessus. Dans ce dispositif, une des électrodes est soudée à une patte d'électrode en dehors d'une poche planaire qui contient deux électrodes, une feuille de matériau séparateur et une substance active intercalaire. Cette soudure est effectuée de manière étanche dans une partie de la zone de scellement d'un film inférieur et d'un film supérieur qui forment ladite poche planaire.

Un problème technique lié aux cellules électrochimiques est qu'il ne peut se trouver, à l'intérieur de la poche enserrant ladite cellule, d'assemblage de parties métalliques de métaux différents, soudées ou en contact, et baignant dans l'électrolyte. Un tel assemblage produit, selon les métaux, des réactions chimiques qui peuvent être violentes, ou bien simplement destructrices de la cellule électrochimique. Si l'assemblage entre les pattes et les plaques d'électrode est fait à l'intérieur de la poche, les métaux doivent être identiques ou compatibles, ce qui réduit le choix des métaux possibles pour constituer les pattes, alors qu'une condition de bon contact électrique avec ces pattes est que leur matériau soit résistant mécaniquement, substantiellement inoxydable, et de résistance électrique faible. Ces qualités ne sont en général pas celles des matériaux compatibles avec les électrodes laminaires des accumulateurs plats.

Un autre problème technique lié aux accumulateurs plats est que, même si le matériau des pattes d'électrodes est résistant mécaniquement et possède toutes les autres qualités citées voulues, ces pattes sont néanmoins de minces lamelles avec lesquelles il est substantiellement difficile de prendre directement des contacts extérieurs.

Un autre problème technique réside dans l'empilement des accumulateurs plats en série ou en parallèle.

Ces problèmes sont résolus au moyen d'un dispositif tel que revendiqué à la Revendication 1.

L'invention est décrite ci-après en référence aux figures schématiques annexées, dont la liste est la suivante :
- la FIG.1 représente une poche étanche avec une cellule électrochimique, vue du dessus ;
- la FIG.2A représente ladite poche, en coupe selon l'axe AA' de la FIG.1 ;
- la FIG.2B représente ladite poche en coupe selon l'axe BB' de la FIG.1 ;
- la FIG.2C représente ladite poche en coupe selon l'axe CC' de la FIG.1 ;
- la FIG.3 représente un empilement vertical de trois poches selon la FIG.1 ;
- la FIG.4 représente un empilement selon la FIG.3 dans un boîtier, formant un accumulateur plat ;
- la FIG.5 représente une coupe de l'accumulateur plat de la FIG.4, selon l'axe DD' ;
- les FIGs.6 représentent un autre mode de réalisation pour une variante de montage en série ou parallèle de plusieurs cellules électrochimiques, parmi lesquelles :
   - la FIG.6A est une vue en perspective de la partie terminale d'une poche ;
   - la FIG.6B est une vue en coupe de l'association de 3 poches pour le montage en série de 3 cellules électrochimiques ;
   - les FIGS.6C et 6D sont des représentations en perspective de corps élastiques conducteurs pour établir les contacts dans le montage en série de la FIG.6B ;
   - la FIG.6E est une vue en perspective correspondant à la FIG.6B où les corps élastiques conducteurs sont vus en transparence.

L'invention concerne un dispositif du type accumulateur plat et mince, incluant une cellule électrochimique planaire. Cette cellule électrochimique comprend au moins deux électrodes laminaires de polarités opposées disposées de part et d'autre d'un matériau poreux imbibé d'électrolyte. Cette cellule est enserrée dans une poche étanche comprenant deux faces planes constituées de feuilles substantiellement souples, d'un matériau étanche et isolant électriquement, au moins sur leurs faces en regard avec la cellule électrochimique. Les feuilles constituant la poche sont raccordées de façon étanche à la périphérie de la cellule électrochimique. La cellule électrochimique a des pattes d'électrode qui s'étendent de façon étanche à travers la zone de raccordement des feuilles de la poche.

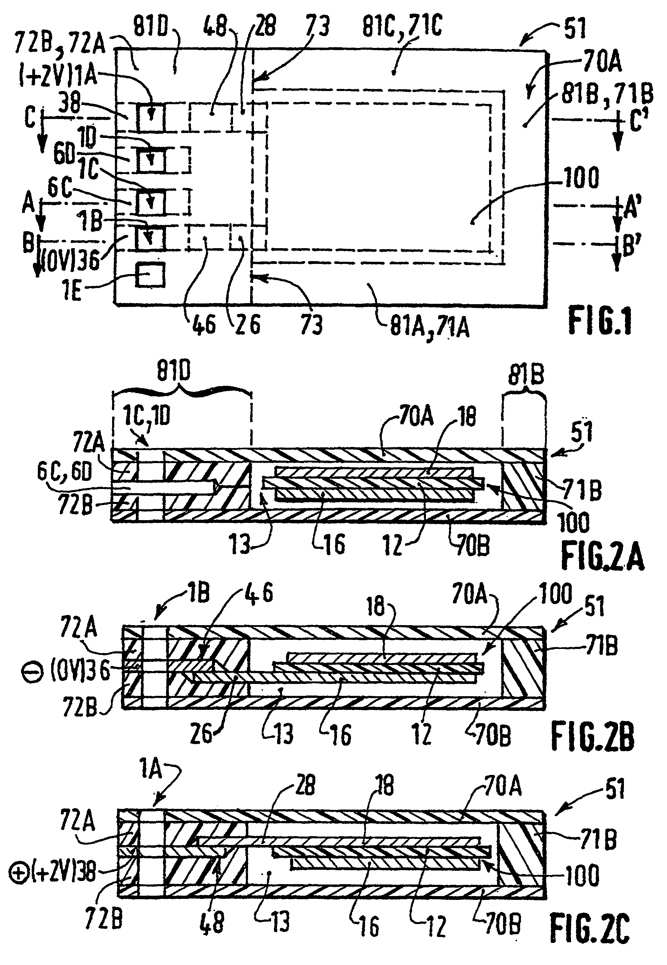

Ainsi, en référence à la FIG.1, vu du dessus et en références aux FIGS.2A à 2C en coupe, l'accumulateur plat comprend une cellule électrochimique planaire 100 enserrée de façon étanche dans une poche 51. La cellule électrochimique 100 comprend au moins deux électrodes laminaires 16 et 18 de polarités différentes disposées de part et d'autre d'une couche 12 d'un matériau séparateur poreux imprégné de l'électrolyte 13. Le matériau séparateur s'étend au-delà des électrodes laminaires pour éviter les courts-circuits. Chaque électrode 16, 18 est prolongée par une patte d'électrode respectivement 26, 28. De préférence, comme sur la FIG.1, la cellule électrochimique est rectangulaire. La poche 51 comprend une première et une seconde feuilles 70A et 70B d'un matériau souple, et totalement étanche et isolant électriquement. Ces feuilles 70A, 70B enserrent la cellule électrochimique planaire 100 parallèlement aux électrodes laminaires 18, 16. La poche 51 comprend en outre un cadre 71, 72 disposé de manière périphérique à la cellule planaire 100. De manière préférentielle, le cadre comprend une partie 71 qui s'étend sur trois des côtés de la cellule électrochimique 100, en trois positions contiguës 71A, 71B, 71C, disposées entre les feuilles 70A, 70B comme représenté sur la FIG.1. Le cadre est en un matériau de préférence moins souple que les feuilles. Sur le quatrième côté de la cellule électrochimique, le cadre comprend une partie 72 composée de préférence de deux portions 72A, 72B superposées et disposées entre les feuilles 70A, 70B et raccordées entre elles, et raccordées aux portions 71A et 71C de façon étanche, par exemple par une soudure 73. Grâce à cette soudure, la dimension de la cellule électrochimique et les dimensions des portions 71A et 71C et des feuilles 70A, 70B peuvent être changées, sans changer les portions 72A, 72B. Les portions de cadre 71, 72 sont scellées aux feuilles 70A, 70B de façon étanche de manière périphérique dans les zones de scellement 81A, B, C et D. Les pattes d'électrode 28, 26 s'étendent à travers le scellement étanche des portions de cadre 72A, 72B superposées. Les pattes d'électrodes ne sont en général pas appropriées à fournir des zones de contact direct pour l'usage de l'accumulateur, parce qu'elles sont trop fines et en un matériau appelé premier matériau peu résistant mécaniquement.

Pour pallier cet inconvénient, les pattes d'électrodes 26, 28 sont munies de prolongement 36, 38 formés de lamelles métalliques réalisées en un second matériau plus approprié, de préférence un métal peu oxydable et bon conducteur, et sont réalisées en une épaisseur suffisante pour être mécaniquement résistantes. Ces prolongements 36, 38 de pattes d'électrodes sont connectés électriquement aux pattes d'électrodes 26, 28 par exemple par des soudures respectivement 46, 48. Les zones de soudure 46,48 sont bloquées de façon étanche dans la zone de scellement des portions de cadre superposées 72A, 72B, dans la zone de scellement périphérique 81D des feuilles 70A, 70B. Cet agencement présente l'avantage que les zones de soudure 46, 48 ne baignent pas dans l'électrolyte 13, et donc que les matériaux des prolongements 36, 38 ne peuvent engendrer de réactions chimiques avec les matériaux d'électrodes et l'électrolyte. Les portions de cadre superposées 72A, 72B et les feuilles isolantes 70A, 70B qui sont scellées de part et d'autre de la partie de cadre 72 sont munies d'ouvertures 1A et 1B en coincidence avec lamelles de prolongements de contacts d'électrodes 36, 38. Ces ouvertures sont faites de part en part des portions 70A, 72A d'une part, et de part en part des portions 70B, 72B d'autre part, de sorte que les lamelles 36, 38 formant prolongements d'électrodes sont découvertes dans les ouvertures 1A, 1B sur leurs deux faces. En outre, dans la région de scellement des portions de cadre superposées 72A, 72B, une, deux, ou trois, ou plusieurs autres ouvertures, telles que les ouvertures 1A, 1B sont percées de part en part dans les feuilles et portions 70A, 72A, 72B, 70B superposées. En référence à la FIG.1 la poche 100 comporte ainsi deux ouvertures supplémentaires 1C et 1D disposées entre les ouvertures 1A et 1B. Ces ouvertures supplémentaires peuvent, d'une autre manière possible, être disposées de part et d'autre, ou bien autrement, à proximité des ouvertures 1A, 1B dans ladite région de cadre 72.

En référence à la FIG.1 et à la FIG.2A, en coïncidence avec les ouvertures supplémentaires 1C et 1D, des lamelles de contact 6C et 6D sont pincées entre les portions de cadre 72A, 72B de façon étanche. Ainsi ces lamelles métalliques 6C, 6D, favorablement du même type que les lamelles 36, 38 sont découvertes dans les ouvertures 1C, 1D sur leurs deux faces. Une ouverture 1E percée de part en part dans les feuilles et portions 70A, 72A, 72B et 70B peut ne pas coïncider avec une lamelle métallique, mais contenir à la place un élément électronique, tel qu'un microcircuit électronique, ou des éléments de microcircuit électronique. Ladite ouverture 1E peut, dans une variante, ne pas être percée de part en part. Cette ouverture peut par ailleurs permettre le passage d'un évent pour évacuer une surpression occasionnelle qui apparaîtrait dans la cellule électrochimique.

La FIG.2A montre en coupe la poche 51, la cellule électrochimique 100, la patte d'électrode 26, la soudure 46, la lamelle métallique formant prolongement d'électrode 36 et l'ouverture 1B en coïncidence avec ladite lamelle 36. Par exemple, la lamelle 36 peut être la patte correspondant à l'électrode électriquement négative, et par exemple à 0 V.

La FIG.2B montre en coupe la poche 51, la cellule électrochimique 100, la patte d'électrode 28, la soudure 48, la lamelle métallique formant prolongement d'électrode 38 et l'ouverture 1A en coïncidence avec ladite lamelle 38. Par exemple, la lamelle 38 peut être la patte correspondant à l'électrode électriquement positive, et par exemple à + 2 V ou bien à + 6 V.

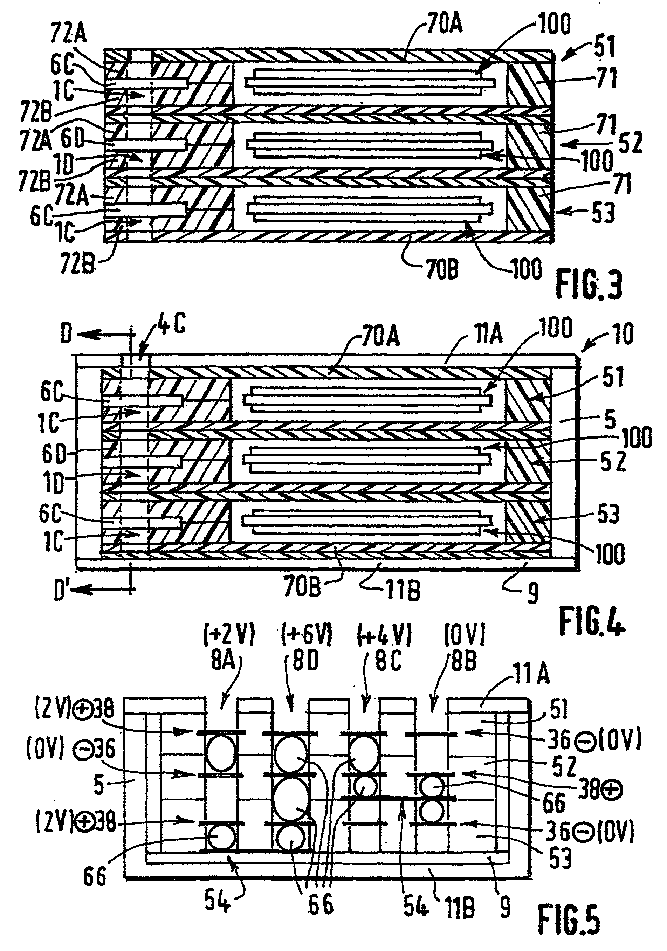

En référence à la FIG.3, un agencement de plusieurs poches superposées est réalisé. La FIG.3 montre un agencement de trois poches telles que 51 des FIGS.1 et 2, référencées 51, 52, 53. Chacune des poches 51, 52, 53 contient une cellule électrochimique et les éléments décrits en référence aux FIGS.1 et 2. Ces poches comprennent ainsi des ouvertures au moins telles que 1A, 1B et de préférence telles que 1C et 1D, et occasionnellement 1E, qui sont respectivement disposées de manière identique et mises en coïncidence dans l'empilement.

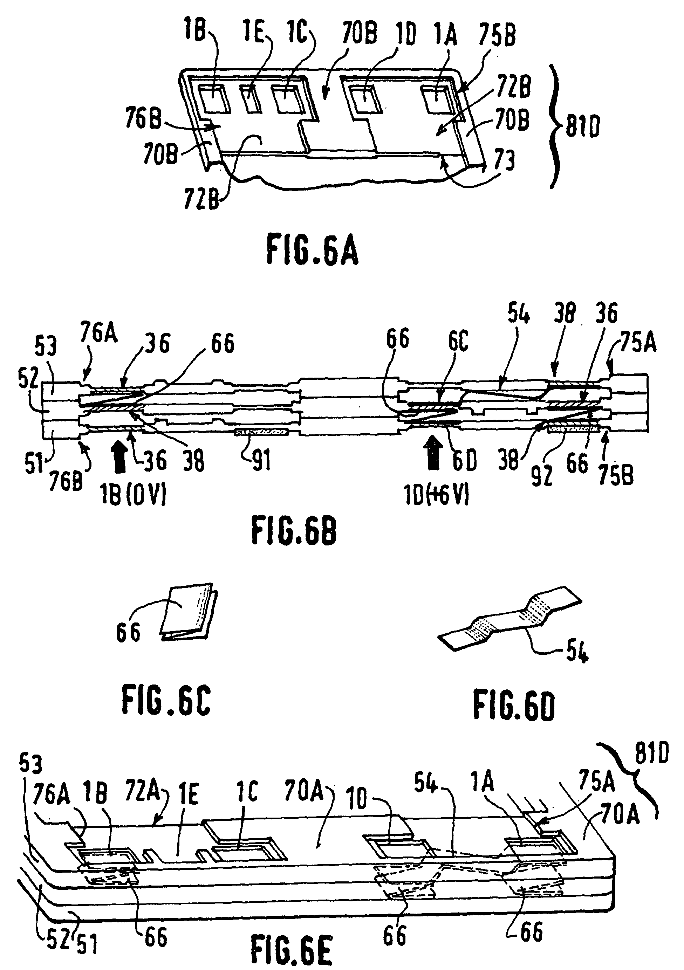

En référence à la FIG.4, l'empilement de poches 51, 52, 53 de la FIG.3 est disposé dans un boîtier 10. Ce boîtier 10 est composé d'un corps de boîtier 5 et de deux plaques 11B et 11A. Le corps du boîtier a l'épaisseur de l'agencement des poches 51, 52, 53. Les plaques 11B, 11A constituent respectivement un socle du boîtier et un couvercle du boîtier, sont placées de manière à enserrer l'agencement de poches 51, 52, 53 et sont assujetties au corps 5 du boîtier 10. Le couvercle 11A du boîtier comprend des ouvertures 4A, 4B, 4C, 4D et occasionnellement 4E exactement en coïncidence avec les ouvertures 1A, 1B, 1C, 1D et 1E des poches 51, 52, 53.

Dans le boîtier, les cellules électrochimiques des poches 51, 52, 53 peuvent être montées en parallèle ou en série. Dans une mise en oeuvre du montage des poches 51, 52, 53 empilées, une couche isolante 9 peut être déposée sur la partie interne du socle 11B du boîtier 10. En référence à la FIG.5, on décrit un montage série. En transposant le principe enseigné en référence à la FIG.5 l'homme du métier peut d'autre part sans difficultés réaliser un montage parallèle, pour une autre application.

Pour réaliser le montage de la FIG.5, trois cellules électrochimiques 0, + 2 V sont montées en série. Dans ce montage, l'ouverture 4A du boîtier, superposée aux ouvertures 1A de chacune des trois poches 51, 52, 53, forme une ouverture 8A qui va jusqu'à la couche isolante 9 du socle du boîtier. De même, des ouvertures 8B, 8C, 8D, 8E coïncident avec les ouvertures ayant la même lettre de référence dans lesdites poches 51 et 53. Selon que les cellules électrochimiques sont montées respectivement en parallèle ou en série, les ouvertures de la poche intermédiaire 52 coïncident en numéro de référence avec celles des poches inférieure et supérieure ou bien elles sont inversées : par exemple l'ouverture 1A de 52 coïncide avec l'ouverture 1B de 51 et 53, et l'ouverture 1B de 52 coïncide avec l'ouverture 1A de 51 et 53. Entre les lamelles supérieures 36, 38 de la poche 51, dans les ouvertures 8B, 8A, on dispose de la tension 0, + 2 V. Le contact peut être pris sur ces lamelles métalliques 36, 38 directement par un picot de contact. Dans cet exemple, on ne tient pas compte du fait que les ouvertures du boîtier 10 sont pratiquées dans le couvercle ou bien dans le socle. On considère que la cellule 51 est la plus proche des ouvertures du boîtier et la cellule 53 est la plus éloignée de ces ouvertures et la plus proche de la couche isolante 9. A titre d'exemple non limitatif, sur la FIG.5 les ouvertures du boîtier sont pratiquées dans le couvercle 11A. Par le montage en série décrit ci-après, des corps de connexion électrique 66 sont introduits dans les ouvertures en vis-à-vis des poches pour réaliser des connexions entre les lamelles des poches adjacentes, et des corps de connexion électrique 54 sont placés entre les lamelles d'une même poche pour réaliser leur connexion de manière à monter les cellules électrochimiques en parallèle ou en série. Lesdits corps de connexion électrique 66 sont introduits dans lesdites ouvertures en vis-à-vis pratiquées dans les poches de manière à réaliser des connexions entre les lamelles des poches adjacentes, et des corps de connexion électrique 54 sont placés entre des lamelles correspondant aux électrodes et des lamelles isolées d'une même poche pour réaliser leur connexion, de manière à monter les cellules électrochimiques en série et à produire diverses différences de tension entre les lamelles qui sont prélevées par contact à travers les ouvertures 4A, 4B, 4C, 4D pratiquées en coïncidence dans le boîtier et dans la zone périphérique de scellement des poches.

Dans la mise en oeuvre exemplifiée en référence à la FIG.5, chaque poche est munie d'une cellule électrochimique fournissant une première différence de tension (0, + 2 V), et le montage en série de ces cellules dans les poches dans le boîtier fournit à travers lesdites ouvertures dans le boîtier une seule ou plusieurs parmi ladite première différence de tension, une seconde différence de tension et une troisième différence de tension triple. Ainsi, en prenant des contacts sur les lamelles 36, 38 de la cellule 51, à travers les ouvertures 8B, 8A du boîtier, on peut prélever une différence de tension 0, + 2 V ; en prenant des contacts sur les lamelles 36, 6D de la cellule 51, à travers les ouvertures 8B, 8D du boîtier, on peut prélever une différence de tension 0, + 6 V ; et en prenant des contacts sur les lamelles 36, 6C de la cellule 51, à travers les ouvertures 8B, 8C du boîtier, on peut prélever une différence de tension 0, + 4 V,

En référence aux FIGS.6A à 6E, il n'est pas nécessaire de positionner une couche isolante 9 au fond du boîtier 10. Dans cette variante de mise en oeuvre de l'invention, les feuilles 70A, 70B montrent respectivement des découpes 75A, 76A et 75B, 76B formant des ouvertures élargies, autour des ouvertures 1A, 1D et 1B, 1C groupées pratiquées dans les portions de cadre 72A, 72B. Les découpes 76A et 76B découvrent aussi les ouvertures 1E par exemple situées entre les ouvertures 1B et 1C et permettent une prise de contact aisée sur les lamelles dans lesdites ouvertures. Dans l'exemple illustré par les FIGS.6, 3 poches 51, 52, 53 sont assemblées de telle sorte que des cellules électrochimiques 0, +2V soient montées en série et fournissent une tension 0, +6V.

A cet effet, en référence à la FIG.6B, comme déjà décrit en référence à la FIG.5, les contacts 36 de polarité négative (0V) des poches 51 et 53 sont mis de part et d'autre du contact 38 de polarité positive +2V de la poche 52, et les ouvertures 1A des poches 51, 562 sont alignées avec l'ouverture 1B de la poche 52 placée en intercalaire. De cette manière, les contacts 38 de polarité positive +2V des poches 51 et 53 sont disposés de part et d'autre du contact 36 de polarité négative (0V) de la poche 52, et les ouvertures 1B des poches 51 et 53 sont alignées avec l'ouverture 1A de la poche 52 intercalaire. Des contacts de type 6, c'est-à-dire non connectés à une électrode se trouvent alors en vis-à-vis dans 1D de la poche 51 et 1C de la poche 52.

En référence à la FIG.6C, des corps conducteurs élastiques en forme de ressort plan en Z sont placés entre les lamelles 36 et 38 des cellules 53 et 52, entre les lamelles de type 6 des ouvertures 1C et 1D des cellules 52 et 51 et entre les lamelles 36 et 38 des cellules 52 et 51 pour établir le contact électrique.

En référence à la FIG.6D en outre, un corps conducteur élastique en forme de lamelle pliée en étages est placé entre le contact de type 6 de l'ouverture 1C et la poche 52 et la lamelle 38 de la poche 53. Ainsi, la lamelle 36 de la poche 51 est à 0V et la lamelle de type 6 de l'ouverture 1D de la même poche 51 est à +6V. Des caches isolants 91 et 92 peuvent être disposés sur les autres lamelles de la poche 51.

L'ensemble des poches 51, 52, 53 est alors placé dans un boîtier 10 comme montré sur la FIG.4. La FIG.6E montre l'assemblage des poches 51, 52, 53 en perspective.

## Revendications

1. Dispositif du type accumulateur plat et mince (10) incluant une cellule électrochimique planaire (100) avec au moins deux électrodes (16, 18) laminaires de polarités opposées disposées de part et d'autre d'un matériau électrolyte (12, 13), une poche étanche (51, 52, 53) incluant deux feuilles (70A, 70B) formant des faces substantiellement planes en un matériau étanche et isolant électriquement, raccordées entre elles dans une zone de scellement périphérique (81A, 81B, 81C, 81D) et des moyens de contact électrique (26, 28) des électrodes formant des pattes d'électrodes s'étendant à travers ladite zone de scellement périphérique, dispositif dans lequel la poche comprend en outre :
- des lamelles formant des prolongements des pattes d'électrodes ayant des régions de contact électrique avec lesdites pattes d'électrodes, lesdites lamelles et lesdites régions de contact s'étendant longitudinalement de manière étanche à travers la zone périphérique de scellement,
- des ouvertures pratiquées transversalement à travers ladite zone périphérique de scellement en coïncidence avec lesdites lamelles de manière à découvrir les deux faces opposées desdites lamelles.

2. Dispositif selon la revendication 1, dans lequel des lamelles supplémentaires. individuelles et isolées (6C, 6D), s'étendent longitudinalement de manière étanche à travers ladite zone périphérique de scellement (81D) et dans lequel des ouvertures (1C, 1D) supplémentaires sont pratiquées transversalement à travers ladite zone périphérique (81D) de scellement, en coïncidence avec lesdites lamelles supplémentaires (6C, 6D) de manière à découvrir les deux faces opposées desdites lamelles supplémentaires.

3. Dispositif selon l'une des revendications 1 ou 2, dans lequel la poche (51, 52, 53) comprend en outre un cadre (71, 72) disposé dans la zone périphérique de scellement (81A, 81B, 81C, 81D), lesdites feuilles (70A, 70B) étant soudées de façon étanche de part et d'autre dudit cadre.

4. Dispositif selon la revendication 3, dans lequel le cadre comprend une première partie continue (71A, 71B, 71C), partiellement périphérique, scellée de manière étanche entre les deux feuilles (70A, 70B) et une seconde partie terminale (71D) ayant une zone de raccordement (73) à la première partie, de manière à fermer la périphérie de la poche (51, 52, 53) de manière étanche dans des parties correspondantes (81A, 81B, 81C, 81D) de la zone de scellement périphérique, et dans lequel lesdites lamelles et lesdites ouvertures sont disposées dans ladite partie terminale (71D) du cadre (71).

5. Dispositif selon la revendication 4, dans lequel la seconde partie terminale du cadre (71D) comprend deux sous-parties (72A, 72B) empilées entre lesdites deux feuilles (70A, 70B) et scellées de manière étanche, sous-parties entre lesquelles les lamelles et lesdites régions de contact des lamelles avec les pattes d'électrode, s'étendant longitudinalement, sont scellées de manière étanche.

6. Dispositif selon l'une des revendications 3 à 5, dans lequel, dans la poche, les feuilles soudées au cadre comprennent des découpes (75A, 76A ; 75B, 76B) autour des ouvertures pratiquées en coïncidence avec les lamelles, pour faciliter la prise de contact sur lesdites lamelles.

7. Dispositif selon l'une des revendications 1 à 6 comprenant en outre un boîtier (10) pour contenir une poche (51) ou plusieurs poches empilées avec leurs feuilles (70A, 70B) placées en parallèle, et avec leurs ouvertures de contact de lamelles en coïncidence, ce boîtier comprenant un socle et un couvercle formés de plaques parallèles auxdites feuilles, et un corps de boîtier (5) scellé aux plaques à leur périphérie, et ce boîtier comprenant des ouvertures (4A, 4B, 4C, 4D) pratiquées en coïncidence avec les ouvertures de la (ou des) poche(s) dans la partie couvercle ou dans la partie fond ou dans les parties couvercle et fond.

8. Dispositif selon la revendication 7, dans lequel ledit boîtier (10) contient une poche (51), et dans lequel la cellule électrochimique à une lamelle (36) prolongement de patte d'électrode, a une première tension (0 V) et à l'autre lamelle (38) prolongement de patte d'électrode a une deuxième tension (+ 2 V ; + 6 V) et où la différence entre la seconde et la première tension est prélevée par contact à travers les ouvertures (4A, 1A ; 4B, 1B) pratiquées en coïncidence dans le boîtier et dans la zone périphérique de scellement de poche.

9. Dispositif selon la revendication 7, dans lequel ledit boîtier (10) contient trois poches (51, 52, 53), dans lequel des corps de connexion électrique (66) sont introduits dans les ouvertures en vis-à-vis des poches pour réaliser des connexions entre les lamelles des poches adjacentes et des corps de connexion électrique (54) sont placés entre les lamelles d'une même poche ou de deux poches adjacentes pour réaliser leur connexion de manière à monter les cellules électrochimiques en parallèle ou en série.

10. Dispositif selon la revendication 8, dans lequel des corps de connexion électrique (66) sont introduits dans lesdites ouvertures en vis-à-vis pratiquées dans les poches de manière à réaliser des connexions entre les lamelles des poches adjacentes, et des corps de connexion électrique (54) sont placés entre des lamelles correspondant aux électrodes et des lamelles isolées d'une même poche ou de deux poches adjacentes pour réaliser leur connexion, de manière à monter les cellules électrochimiques en série et à produire diverses différences de tension entre les lamelles qui sont prélevées par contact à travers les ouvertures (4A, 4B, 4C, 4D) pratiquées en coïncidence dans le boîtier et dans la zone périphérique de scellement des poches.

11. Dispositif selon la revendication 10, dans lequel chaque poche est munie d'une cellule électrochimique fournissant une première différence de tension (0, + 2V), et le montage en série de ces cellules dans les poches dans le boîtier fournit à travers lesdites ouvertures dans le boîtier une seule ou plusieurs parmi ladite première différence de tension (0, +2V), une seconde différence de tension double (0, +4V) et une troisième différence de tension triple (0, +6V).

## Patentansprüche

1. Flach- und Dünnschicht-Akkumulatorvorrichtung (10) mit einer flachen elektrochemischen Zelle (100) mit mindestens zwei laminaren Elektroden (16,18) entgegengesetzter Polarität, beiderseitig eines Elektrolytmaterials (12,13) angeordnet, einem hermetischen Beutel (51, 52, 53) mit zwei Blättern (70A, 70B), zur Bildung zweier grundlegend flachen Seiten aus hermetischem und elektrisch isolierendem Material, miteinander in einem Bereich peripherer Kapselung (81A, 81B, 81C, 81D) verbunden, und elektrischen Kontaktverfahren (26, 28) der Elektroden, zur Bildung von Elektrodenklemmen; die sich über den besagten Bereich peripherer Kapselung erstrecken,
wobei die Vorrichtung außerdem enthält:
- Lamellen zur Bildung von Verlängerungen der Elektrodenklemmen, mit elektrischen Kontaktbereichen mit den besagten Elektrodenklemmen, wobei sich die besagten Lamellen und die besagten Kontaktbereiche längs und hermetisch durch den Bereich peripherer Kapselung erstrecken,
- Öffnungen, quer durch den besagten Bereich peripherer Kapselung gebracht, in Übereinstimmung mit den besagten Lamellen, um die beiden zu den besagten Lamellen gegenüberliegenden Seiten aufzudecken.

2. Vorrichtung nach Anspruch 1, in der sich zusätzliche Lamellen, einzeln und isoliert (6C, 6D), längs und hermetisch durch den Bereich peripherer Kapselung (81D) erstrecken, und in dem zusätzliche Öffnungen (1C, 1D), quer durch den besagten Bereich peripherer Kapselung (81 D) gebracht sind, in Übereinstimmung mit den besagten zusätzlichen Lamellen (6C, 6D), um die beiden zu den besagten zusätzlichen Lamellen gegenüberliegenden Seiten aufzudecken.

3. Vorrichtung nach einem der Ansprüche 1 oder 2, in der der Beutel (51, 52, 53) außerdem einen Rahmen (71, 72) enthält, in dem Bereich peripherer Kapselung (81A, 81B, 81C, 81D) angeordnet, wobei die besagten Blätter (70A, 70B) hermetisch beiderseitig des besagten Rahmens gelötet sind.

4. Vorrichtung nach Anspruch 3, in der der Rahmen einen ersten, fortlaufenden Teil (71A, 71B, 71C) enthält, teilweise peripher, hermetisch zwischen die beiden Blätter (70A, 70B) eingekapselt, und einen zweiten, abschließenden Teil (71D), mit einem Anschlußbereich (73) an den ersten Teil, für den hermetischen Verschluß des Beutels (51, 52, 53) in den dementsprechenden Teilen (81A, 81B, 81C, 81D) des Bereichs peripherer Kapselung, und in der die besagten Lamellen und die besagten Öffnungen in dem besagten abschließenden Teil (71D) des Rahmens (71) angeordnet sind.

5. Vorrichtung nach Anspruch 4, in der der zweite, abschließende Teil des Rahmens (71D) zwei Unterteile (72A, 72B) enthält, zwischen den besagten beiden Blättern (70A, 70B) aufgeschichtet und hermetisch eingekapselt, wobei die Lamellen und die besagten Kontaktbereiche der Lamellen mit den Elektrodenklemmen, sich längs zwischen den Unterteilen erstrecken und hermetisch eingekapselt sind.

6. Vorrichtung nach einem der Ansprüche 3 bis 5, in der in dem Beutel die an den Rahmen gelöteten Blätter Aussparungen (75A, 76A; 75B, 76B) um die in Übereinstimmung mit den Lamellen eingebrachte Öffnungen aufweisen, um die Kontaktentnahme an den besagten Lamellen zu erleichtern.

7. Vorrichtung nach einem der Ansprüche 1 bis 6, mit zudem einem Gehäuse (10) zur Aufnahme eines Beutels (51) oder mehrerer, mit ihren Blättern (70A, 70B) aufgeschichteter, parallel angeordneter und mit den Öffnungen ihrer Kontaktlamellen übereinstimmender Beutel, wobei dieses Gehäuse ein Unterteil und ein Oberteil enthält, gebildet aus zu den besagten Blättern parallelen Platten, und einen in die Peripherie der Platten eingekapselten Gehäusekörper (5), wobei dieses Gehäuse in Übereinstimmung mit den Öffnungen des (oder der) Beutel(s) in das Oberteil oder das Bodenteil oder das Oberteil und das Bodenteil eingebrachte Öffnungen (4a, 4B, 4C, 4D) aufweist.

8. Vorrichtung nach Anspruch 7, in der das besagte Gehäuse (10) einen Beutel (51) enthält, und in dem die elektrochemische Zelle an einer Lamelle (36) zur Verlängerung der Elektrodenklemme eine erste Spannung (0 V) hat, und an der anderen Lamelle (38) zur Verlängerung der Elektrodenklemme eine zweite Spannung (+ 2 V; + 6 V), und wo die Differenz zwischen der zweiten und der ersten Spannung per Kontakt über die in das Gehäuse und den Bereich peripherer Kapselung übereinstimmend eingebrachten Öffnungen (4a, 1A; 4B, 1B) entnommen wird.

9. Vorrichtung nach Anspruch 7, in der das besagte Gehäuse (10) drei Beutel (51, 52, 53) enthält und in das elektrische Anschlußkörper (66) in die Öffnungen gegenüber der Beutel eingebracht werden, um Verbindungen zwischen den Lamellen der angrenzenden Beutel herzustellen, und es werden elektrische Anschlußkörper (54) zwischen die Lamellen eines selben Beutels oder zweier angrenzender Beutel gebracht, um deren Verbindung über eine parallele oder serielle Schaltung der elektrochemischen Zellen herzustellen.

10. Vorrichtung nach Anspruch 8, in der die elektrischen Anschlußkörper (66) in die besagten gegenüberliegenden Öffnungen der Beutel eingebracht werden, um Verbindungen zwischen den Lamellen angrenzender Beutel herzustellen, und es werden elektrische Anschlußkörper (54) zwischen die Lamellen entsprechend den Elektroden und den isolierten Lamellen eines selben Beutels oder zweier angrenzender Beutel gebracht, um sie anzuschließen und die elektrochemischen Zellen in Serie zu schalten und diverse Spannungsunterschiede zwischen den Lamellen zu erzeugen, die über Kontakte durch die Öffnungen (4A, 4B, 4C, 4D), übereinstimmend in das Gehäuse und den peripheren Kapselungsbereich der Beutel eingebracht, entnommen werden.

11. Vorrichtung nach Anspruch 10, in der jeder Beutel mit einer elektrochemischen Zelle versehen ist, die einen ersten Spannungsunterschied (0, + 2 V) liefert, und die Serienschaltung dieser Zellen in den Beuteln im Gehäuse liefert über die besagten Öffnungen im Gehäuse einen oder mehrere des besagten ersten Spannungsunterschieds (0, + 2 V), einen zweiten, doppelten Spannungsunterschied (0, + 4 V) und einen dritten, dreifachen Spannungsunterschied (0, + 6 V).

## Claims

1. A flat and thin accumulator device (10) including a planar electrochemical cell (100) with at least two laminar electrodes (16, 18) having opposite polarities, which electrodes are disposed on both sides of an electrolyte material (12, 13), a moisture-proof envelope (51, 52, 53) having two foils (70A, 70B) which form substantially plane faces of a moisture-proof and electrically insulating material, which faces are interconnected in a peripheral sealing area (81A, 81B, 81C, 81D), and electrical contact means (26, 28) of the electrodes forming electrode terminals which extend through said peripheral sealing area, in which device the envelope also includes:
- tabs forming extensions of the electrode terminals which have electrical contact areas with said electrode terminals, said tabs and said contact areas longitudinally extending in a sealed manner through the peripheral sealing area,
- openings made transversely through said peripheral sealing area so as to coincide with said tabs and uncover the two opposite faces of said tabs.

2. A device as claimed in claim 1, in which additional, individual and insulated tabs (6C, 6D) longitudinally extend in an airtight manner through said sealing peripheral area (81D) and in which additional openings (1C, 1D) are made transversely through said peripheral sealing area (81D) so as to coincide with said additional tabs (6C, 6D) and uncover the two opposite faces of said additional tabs.

3. A device as claimed in one of the claims 1 or 2, in which the envelope (51, 52, 53) also includes a frame (71, 72) disposed in the peripheral sealing area (81A, 81B, 81C, 81D), said foils (70A, 70B) being soldered in an airtight manner on both sides of said frame.

4. A device as claimed in claim 3, in which the frame comprises a first, partly peripheral continuous section (71A, 71B, 71C), sealed in an airtight manner between the two foils (70A, 70B), and a second terminal section (71D) which has a connection area (73) for connection to the first section so as to close the periphery of the envelope (51, 52, 53) in an airtight manner in corresponding sections (81A, 81B, 81C, 81D) of the peripheral sealing area, and in which said tabs and said openings are disposed in said terminal section (71D) of the frame (71).

5. A device as claimed in claim 4, in which the second terminal section of the frame (71D) comprises two sub-sections (72A, 72B) that are stacked between said two foils (70A, 70B) and sealed in an airtight manner, between which sub-sections the tabs and said contact areas of the tabs with the electrode terminals, which extend longitudinally, are sealed in an airtight manner.

6. A device as claimed in one of the claims 3 to 5, in which, in the envelope, the foils soldered to the frame comprise cut-outs (75A, 76A; 75B, 76B) around openings made so as to coincide with the tabs to facilitate the contacting of said tabs.

7. A device as claimed in one of the claims 1 to 6, also comprising a housing (10) for containing an envelope (51) or various envelopes stacked with their foils (70A, 70B) arranged in parallel and with their contact tab openings in coincidence, said housing comprising a base plate and a cover formed by plates running parallel to said foils, and a housing body (5) sealed to the plates along their periphery, and said housing having openings (4A, 4B, 4C, 4D) made to coincide with the openings of the envelope(s) provided in the cover part or in the base part or in the cover and base parts.

8. A device as claimed in claim 7, in which said housing (10) contains an envelope (51), and in which the electrochemical cell has one tab (36) which is an extension of one electrode terminal and carries a first voltage (0V) and has the other tab (38) as an extension of the other electrode terminal that carries a second voltage (+2V; +6V), and where the difference between the second and first voltages is tapped by contact through the coincident openings (4A, 1A; 4B, 1B) formed in the housing and in the peripheral sealing area of the envelope.

9. A device as claimed in claim 7, in which said housing (10) contains three envelopes (51, 52, 53) in which electrical connection bodies (66) are inserted into the openings opposite the envelopes so as to realize connections between the tabs of the adjacent envelopes and electrical connection bodies (54) placed between the tabs of the same envelope or of two adjacent envelopes to realize their connection so as to connect the electrochemical cells in parallel or in series.

10. A device as claimed in claim 8, in which electrical connection bodies (66) are inserted into said opposite openings provided in the envelopes so as to realize connections between the tabs of the adjacent envelopes, and electrical connection bodies (54) are placed between tabs which correspond to the electrodes and insulated tabs of the same envelope or of two adjacent envelopes to realize their connection so as to connect the electrochemical cells in series and create various voltage differences between the tabs which are tapped via a contact across the corresponding openings (4A, 4B, 4C, 4D) made in the housing and in the peripheral sealing area of the envelopes.

11. A device as claimed in claim 10, in which each envelope has a electrochemical cell which produces a first voltage difference (0, +2V), and the series combination of these cells in the envelopes in the housing creates through said openings in the housing a single or various voltage differences, among which said first voltage difference (0, +2V), a second, double, voltage difference (0, +4V) and a, third, threefold voltage difference (0, +6V).
